# FASCICULE DE BREVET EUROPEEN

(11) **EP 4 486 644 B1**
(45) Date de publication et mention de la délivrance du brevet: **04.03.2026**
(21) Numéro de dépôt: 22829764.4
(22) Date de dépôt: 02.12.2022
(51) Int. Cl.: B63H 9/072, B63H 9/071

(54) **STRUCTURE D'ACCUEIL D'UNE NACELLE D'AILE VOLANTE DE TRACTION ET PROCEDE DE DECOLLAGE ET D'ATTERRISSAGE D'UNE TELLE NACELLE**
STRUKTUR ZUR AUFNAHME EINES PODES FÜR EINEN ZUGDRACHEN UND VERFAHREN ZUM STARTEN UND LANDEN SOLCH EINES PODES
STRUCTURE FOR ACCOMMODATING A POD FOR A TRACTION KITE AND METHOD FOR THE TAKE-OFF AND LANDING OF A SUCH A POD

(30) Priorité: 14.12.2021 FR 2113522
(43) Date de publication de la demande: 08.01.2025
(73) Titulaire: Kawasaki Kisen Kaisha Ltd, Tokyo 100-8540 (JP)
(72) Inventeur: LAMAT, Eric, 31280 MONS (FR); JAN, Stéphane, 31450 MONTGISCARD (FR); HAUDEBAULT, Jean-Luc, 79260 FRANCOIS (FR)
(74) Mandataire: Junca, Eric
(86) Numéro de dépôt international: PCT/EP2022/084235
(87) Numéro de publication internationale: WO 2023/110459

(56) Documents cités:
- DE-A1- 102015 111 224

## Description

### DOMAINE TECHNIQUE

L'invention se rapporte à une structure d'accueil d'une nacelle d'aile volante de traction, ainsi qu'à un procédé de décollage et d'atterrissage de nacelle d'aile volante de traction utilisant une telle structure. Une aile de traction est classiquement adaptée à se déployer et à générer une force de traction sous l'effet du vent, ainsi qu'à se replier de la façon suivante :
- lorsque l'aile volante est rangée, la nacelle est posée sur sa structure d'accueil, elle-même solidaire d'une plateforme de base
- lorsque l'aile volante se déploie, la nacelle décolle avec l'aile et quitte sa structure d'accueil ;
- lorsque l'aile volante se replie, la nacelle atterrit sur la structure d'accueil, et
- lorsque l'aile volante est repliée, la nacelle est posée sur la structure d'accueil.

Une telle aile volante de traction est utilisée pour la propulsion d'un véhicule - notamment un navire - ou pour toute application tirant profit d'une telle force de traction comme pour la production d'électricité.

Dans le domaine du transport maritime en particulier, cette aile volante de traction est capable de fournir à un navire un moyen de propulsion principal ou complémentaire. Un tel navire est en général propulsé par un moteur alimenté en combustible lourd comme le fioul qui émet une grande quantité de polluants (oxydes de soufre, oxydes d'azote et dioxyde de carbone). Compléter ou remplacer ce moyen de propulsion polluant par une aile de traction permet de baisser la consommation d'hydrocarbures, de diminuer l'émission de polluants et de bénéficier d'une source d'énergie propre et renouvelable.

### ÉTAT DE LA TECHNIQUE

Le principe de l'aile volante de traction repose sur le déploiement d'une aile volante, celle-ci fournissant une force de traction une fois déployée et gonflée. Une telle aile est classiquement solidaire d'une nacelle qui est reliée par un câble de traction, dit ombilic, à une plateforme du véhicule. La nacelle embarque généralement des modules de contrôle de l'aile. Lorsque l'aile n'est pas déployée, elle est rangée avec la nacelle et l'ombilic dans un caisson de stockage commun.

La nacelle accompagne donc l'aile volante en particulier lors de son déploiement et lors de son repliement. La nacelle est usuellement guidée par un opérateur lors de son envol pendant le déploiement et lors de son atterrissage pendant le repliement. Ce guidage permet d'assurer que la ligne, la nacelle et la voile ne soient pas emmêlés lors de leur sortie et de leur rangement dans le caisson de stockage commun.

Ces étapes nécessitent donc une intervention humaine et une vérification visuelle à chaque déploiement/repliement. Or cette intervention humaine limite la taille de la nacelle et de son contenu. En outre, une nacelle plus complexe comportant des sondes, des balises ou tout autre équipement requis dans le cadre de l'utilisation de l'aile, devient difficilement manipulable par un opérateur. De plus une telle nacelle étant stockée sous l'aile dans le caisson de stockage, elle est inaccessible pour effectuer une maintenance de ses équipements.

Cette nacelle présente également l'inconvénient d'être en permanence suspendue pendant toute la durée de déploiement de l'aile, ce qui peut en entraver son déploiement par la masse supplémentaire qu'elle doit supporter - la masse de la nacelle. De plus la position de la nacelle n'est pas maitrisée pendant toute les phases de déploiement et de repliement : la probabilité des risques de collision de la nacelle avec l'environnement augmente alors

Le document DE 10 2015 111 224 A1 montre une structure d'accueil de nacelle d'aile volante reliée par un ombilic à un navire selon la préambule de la revendication 1 et un procédé de décollage et d'atterissage d'une nacelle d'aile volante.

### EXPOSE DE L'INVENTION

Afin de remédier aux inconvénients de l'état de la technique exposés ci-dessus, l'invention a pour objectif principal d'améliorer le contrôle de la nacelle à l'aide d'un positionnement variable permettant de porter la nacelle pendant le déploiement de l'aile volante de traction, de réceptionner la nacelle pendant le repliement de l'aile et d'être escamoté de l'ombilic après l'envol de l'aile, la nacelle s'adaptant ainsi aux mouvements de l'aile et de la ligne.

Plus précisément, la présente invention a pour objet une structure d'accueil d'une nacelle d'aile volante de navire, cette nacelle étant reliée par un ombilic à un navire. Cette structure comporte un bâti définissant un plan horizontal, au moins une poulie de liaison de l'ombilic, celle-ci étant montée sur un châssis, ainsi qu'un bras suiveur et un support de nacelle. Le support comporte :
- au moins deux plateaux superposés, un plateau dit inférieur sous un plateau dit supérieur, le plateau supérieur accueillant la nacelle ;
- au moins un moyen de rappel élastique et déformable de solidarisation des plateaux ;
- au moins un moyen de guidage et de captage de l'ombilic.
Le support est relié au bâti par au moins un bras redresseur fixé sur le plateau inférieur et mobile par rapport au bâti entre au moins une position de stockage de la nacelle, une position de décollage de la nacelle, une position de croisière à distance de l'ombilic, une position de captage de l'ombilic et une position d'atterrissage de la nacelle.

Avantageusement, une architecture en multi-plateaux solidarisés par des moyens de rappel élastique permet d'accompagner les mouvements de la nacelle avant son décollage et d'amortir son atterrissage. Ainsi, l'accompagnement lors du décollage et de l'atterrissage diminue les tensions dans l'ombilic ainsi que dans l'aile de traction, et aide à optimiser le dimensionnement de ces éléments. L'amortissement de la nacelle lors de l'atterrissage diminue l'impact lors du contact entre la nacelle et le support : le matériel contenu dans la nacelle subit moins de secousses lors de ce contact, ce qui diminue le besoin en protection de ce matériel ainsi que la masse globale de la nacelle.

Avantageusement également, le système de guidage et de captage de l'ombilic intégré au support permet de guider l'ombilic et donc la nacelle dans une position favorable à la réception et à l'atterrissage de celle-ci, sans besoin de guidage manuel par un opérateur. Le guidage manuel par un opérateur est limité par la force que celui-ci peut exercer et par conséquence limite également l'encombrement et la masse de la nacelle. Le moyen de guidage selon la présente invention permettrait donc d'utiliser des nacelles de masse et d'encombrement plus importants en limitant les risques liés à la sécurité.

Avantageusement également, le support est mobile pour suivre les mouvements de la nacelle : la course du support s'adapte à celle de la nacelle et une fois que celle-ci est en vol, le support s'escamote en position de croisière pour ne pas entraver les mouvements de l'ombilic et donc de l'aile, alors qu'une telle entrave réduirait l'efficacité de l'aile volante.

Selon des formes de réalisation préférées, prises séparément ou en combinaison :
- le support est relié au bâti par deux bras redresseurs localisés de part et d'autre de la poulie d'entrainement et solidarisés à l'une de leurs extrémités par une barre transverse ;
- le plateau inférieur du support est vissé à la barre transverse ;
- les bras redresseurs sont mobiles en rotation autour d'un axe parallèle au plan horizontal et sont actionnés par au moins un mécanisme d'entrainement ;
- le mécanisme d'entrainement est constitué par des vérins ;
- en position de stockage, le support est dans un plan parallèle au plan horizontal et l'ombilic forme un angle compris entre 60° et 120° par rapport au plan horizontal ;
- le plateau supérieur présente un moyen de centrage de la nacelle ;
- les moyens de rappel élastique sont constitués par 3 ressorts pour optimiser la stabilisation les plateaux ;
- le plateau supérieur peut basculer par rapport au plateau inférieur d'un angle inférieur à 30° ;
- le moyen de guidage et de captage ramène l'ombilic à partir d'un angle maximum de 40° par rapport à un axe vertical perpendiculaire au plan horizontal:
- le moyen de guidage est intégré au plateau inférieur ;
- le moyen de guidage est en plastique tel que le DELRIN ;
- le châssis de la poulie de liaison est équilibré et articulé latéralement autour d'un axe perpendiculaire à l'axe de rotation des bras redresseurs et parallèle au plan horizontal ;
- au moins un bras redresseur est équipé d'un galet de guidage ;
- le châssis de la poulie de liaison comporte au moins une piste de guidage en vis-à-vis de chaque galet de guidage ;
- la structure d'accueil comporte des capteurs de position des bras redresseurs, du châssis de la poulie de liaison et du bras suiveur ;
- au moins un capteur de présence sur le plateau supérieur détecte la présence de la nacelle, et
- au moins un capteur sur le plateau inférieur au voisinage des moyens de rappel élastique détecte la position et le centrage du plateau supérieur par rapport au plateau inférieur pour verrouiller la nacelle sur le support en position de stockage.

L'invention se rapporte également à un procédé de décollage et d'atterrissage d'une nacelle d'aile volante sur le support d'une structure d'accueil. Le décollage de la nacelle à partir de la position de stockage se déroule selon les étapes suivantes :
- une étape de basculement du support et de la nacelle vers la position de décollage ;
- une étape de déploiement de l'aile volante ;
- le décollage de la nacelle et le déroulement de l'ombilic qui s'étend dans un champ de déplacement, et
- un basculement du support jusqu'à être écarté du champ de déplacement de l'ombilic vers la position de croisière.

Et l'atterrissage de la nacelle pour rejoindre la position de stockage se déroule selon les étapes suivantes :
- une étape de descente de l'aile et de la nacelle par traction sur l'ombilic ;
- un basculement retour du support qui entre dans le champ de déplacement de l'ombilic ;
- un captage puis centrage de l'ombilic pendant le basculement retour du support qui réduit progressivement le champ de déplacement de l'ombilic ;
- un basculement retour du support jusqu'à la position d'atterrissage;
- l'atterrissage de la nacelle sur le support, et
- un basculement vers la position de stockage.

Avantageusement, le décollage et l'atterrissage de la nacelle sont dissociés respectivement de l'envol et du repliement de l'aile, permettant ainsi de réduire les risques d'emmêlement des lignes. De plus, en position de stockage, la nacelle est posée sur son support ce qui la rend accessible pour des opérations de maintenance.

Avantageusement également, lors du décollage, la cinématique de basculement de la nacelle suit l'alignement de l'ombilic et favorise ainsi l'envol de l'aile en réduisant la tension de l'ombilic. Lors de l'atterrissage, l'étape de captage et de centrage de l'ombilic sécurise le retour de la nacelle en guidant la nacelle vers le support.

Selon des formes de mise en œuvre préférées prises individuellement ou en combinaison :
- le décollage et l'atterrissage de la nacelle sont automatisés par localisation du basculement du support, du bras suiveur et de la poulie de liaison ainsi que par asservissement du basculement des bras redresseurs ;
- la position de décollage est atteinte lorsque le basculement du support induit une inclinaison de l'ombilic d'un angle compris entre 70° et 80° par rapport au plan horizontal ;
- en position de décollage, une étape de basculement de la nacelle par rapport au support pour que la nacelle suive la direction de l'aile;
- en position de croisière, les bras redresseurs arrivent en butée du bâti pour escamoter le support du champ de déplacement de l'ombilic qui est inclus dans un cône de demi-angle au sommet égal à 80° et d'axe perpendiculaire au plan horizontal ;
- lors de l'étape de captage, le champ de déplacement de l'ombilic est inclus dans un cône de demi-angle au sommet égal à 20°.
- un guidage et de maintien de la poulie de liaison par les bras redresseurs pendant l'étape de captage de l'ombilic pour amener la poulie à la verticale lors de la position d'atterrissage ;
- un amortissement de la nacelle pendant l'atterrissage sur le support, et
- une étape de tension de l'ombilic après détection de l'atterrissage de la nacelle sur le support pour maintenir la nacelle sur le support.

Avantageusement, le procédé est automatisé et permet un décollage et un atterrissage autonome de la nacelle sans l'intervention d'un opérateur à proximité de la nacelle. De plus, les déplacements de la nacelle lors de l'atterrissage sont contrôlés - notamment lors du captage de l'ombilic - ce qui améliore la sécurité relative à ces déplacements, en particulier par la diminution des risques de chocs dans l'environnement proche de la nacelle et de la station d'accueil.

### PRESENTATION DES FIGURES

D'autres caractéristiques et avantages de la présente invention ressortiront à la lecture qui suit d'un exemple de réalisation détaillé sans en limiter la portée, en référence aux figures annexées qui représentent, respectivement :
- la figure 1, une vue en latérale du déploiement d'une aile de traction ;
- la figure 2, une vue en perspective d'une plateforme sur laquelle sont disposées deux structures d'accueil et deux nacelles en position de stockage ;
- la figure 3, une vue en perspective de la structure d'accueil avec la nacelle en position de stockage ;
- la figure 4a, une vue latérale de la structure d'accueil en position de stockage ;
- la figure 4b, une vue latérale de la structure d'accueil en position de stockage avec la libération du plateau supérieur ;
- la figure 5, une vue latérale de la structure d'accueil en position de décollage après basculement du plateau supérieur du support ;
- la figure 6, une vue latérale de la structure d'accueil en position de croisière ;
- la figure 7, une vue latérale de la structure d'accueil en position de captage de l'ombilic ;
- la figure 8, une vue en perspective du support, et
- la figure 9, un logigramme de procédé de décollage et d'atterrissage de la nacelle de son support.

### DESCRIPTION DETAILLEE

Sur les figures, des signes de référence identiques renvoient à un même élément ainsi qu'aux passages de la description correspondants.

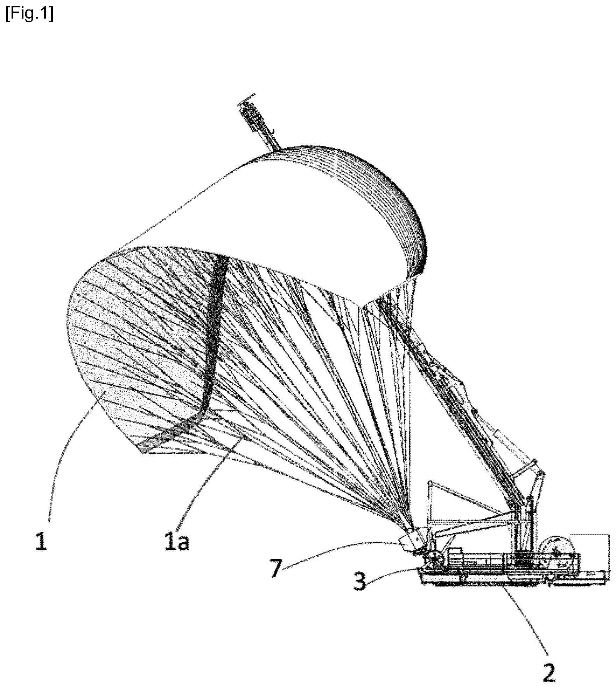

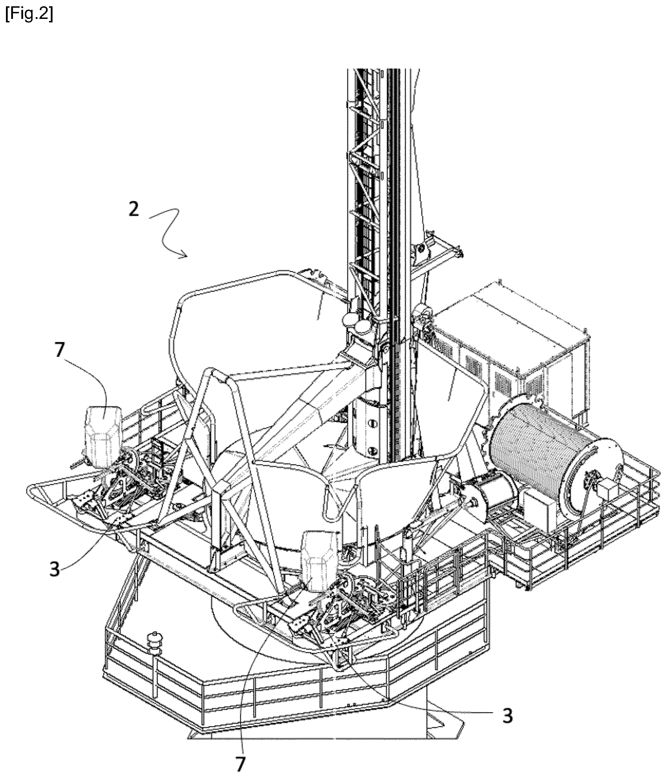

La figure 1 illustre une aile 1 volante de traction en cours de déploiement : elle est reliée à la nacelle 7 par plusieurs lignes 1a. Cette nacelle 7 est posée sur une structure d'accueil 3 disposée sur une plateforme 2 d'un navire (non représenté). Cette plateforme, illustrée en perspective en figure 2, montre deux structures d'accueil 3 portant chacune une nacelle 7.

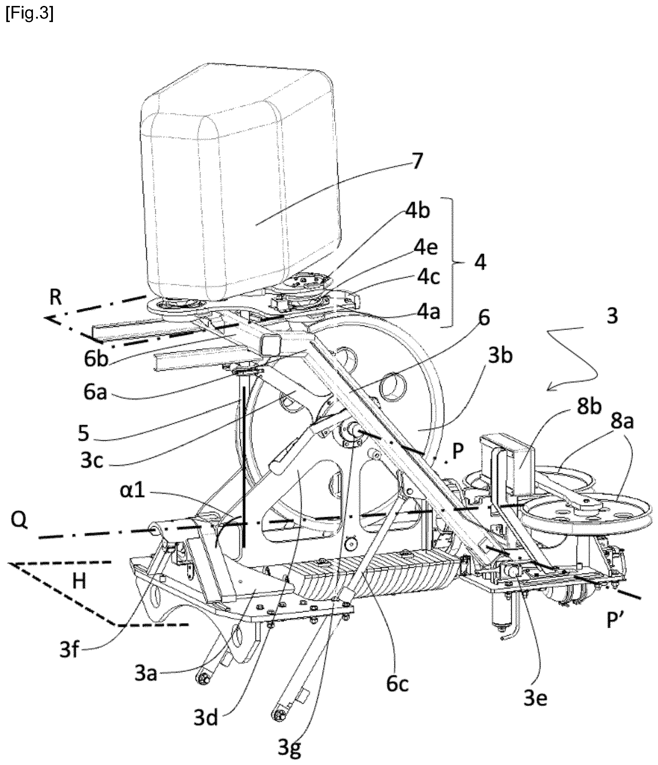

La figure 3 présente une vue en perspective d'une structure d'accueil 3 d'une nacelle 7 d'aile 1 volante de traction du navire, cette nacelle 7 étant reliée par un ombilic 5 au navire. La structure d'accueil 3 est ici en position de stockage de la nacelle 7 qui est alors posée et maintenue sur ladite structure d'accueil 3. Cette structure comporte :
- un bâti 3a définissant un plan horizontal H ;
- une poulie de liaison 3b de l'ombilic 5, celle-ci étant montée sur un châssis 3d ;
- un bras suiveur 3c fixée sur la poulie d'entrainement 3b pour maintenir l'ombilic 5 dans la poulie 3b ;
- un support 4 de nacelle ;
- deux poulies secondaires de guidage 8a orientées parallèlement au plan horizontal H, et
- une guillotine 8b de coupure d'urgence de l'ombilic.

Le support 4 comporte :
- deux plateaux superposées : un plateau dit inférieur 4a disposé sous un plateau dit supérieur 4b, ce dernier accueillant la nacelle 7 ;
- des ressorts 4e - ici au nombre de trois pour des raisons de stabilité - ces ressorts 4e reliant les plateaux 4a, 4b à leurs extrémités afin de constituer des moyens de rappel élastique et déformables de solidarisation des plateaux, et
- un bord 4c de guidage et de captage de l'ombilic 5.

De plus, ce support 4 est relié au bâti 3a par deux bras redresseurs 6 localisés de part et d'autre de la poulie de liaison 3b et solidarisés à l'une de leurs extrémités 6a par une barre transverse 6b, sur laquelle est vissé le plateau inférieur 4a du support 4. Ces bras redresseurs 6 sont mobiles en rotation par rapport au bâti 3a, cette rotation s'effectuant autour d'un axe P' parallèle au plan horizontal H : dans ces conditions la rotation des bras redresseurs 6, et en conséquence du support 4, est alignée avec la rotation de la poulie de liaison 3b autour d'un axe P et donc avec la direction d'enroulement de l'ombilic 5. Le châssis 3d est équilibré et articulé latéralement selon un angle compris entre -80° et +80 ° autour d'un axe Q perpendiculaire à l'axe de rotation P' des bras redresseurs 6 et parallèle au plan horizontal H. Ce mouvement de basculement participe à l'accompagnement de l'ombilic 5 par la poulie 3b.

La rotation des bras redresseurs 6 est actionnée par deux vérins 6c qui constituent des mécanismes d'entrainement pour placer successivement le support 4 dans les positions suivantes :
- une position de stockage de la nacelle 7 ;
- une position de décollage de la nacelle 7 ;
- une position de croisière à distance de l'ombilic 5 ;
- une position de captage de l'ombilic 5, et
- une position d'atterrissage de la nacelle 7.

D'autres positions du support sont envisageables en fonction des besoins, en particulier une position de maintenance permettant un accès facilité à la nacelle pour effectuer des opérations de maintenance.

La structure d'accueil 4 comporte des capteurs de positions : des codeurs angulaires 3e, 3f, 3g pour déterminer les positions angulaires de respectivement les bras redresseurs 6, le châssis 3d de la poulie de liaison 3b et du bras suiveur 3c. Dans cet exemple de réalisation, des capteurs de positions angulaire ont été utilisés : d'autres types de capteurs de position tels que des capteurs de proximité peuvent être utilisés pour déterminer les positions des bras redresseurs 6, du châssis 3d et du bras suiveur 3c.

Dans cette position de stockage, l'ombilic 5 forme un angle α1 de 90° par rapport au plan horizontal et le support 4 est dans un plan R incliné. Alternativement, le support peut être dans un plan R horizontal et l'ombilic 5 former un angle de 95° par rapport au plan horizontal H définit parallèlement au plan de flottaison de l'eau.

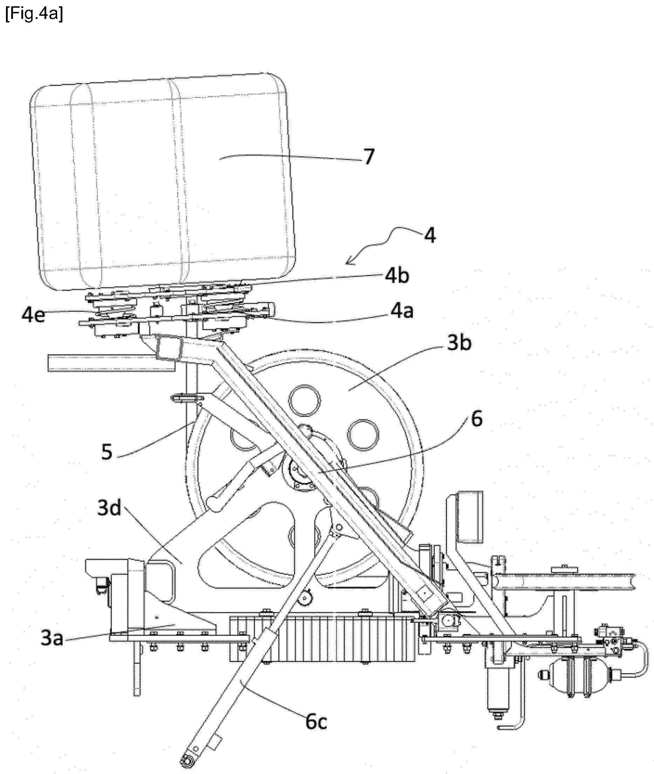

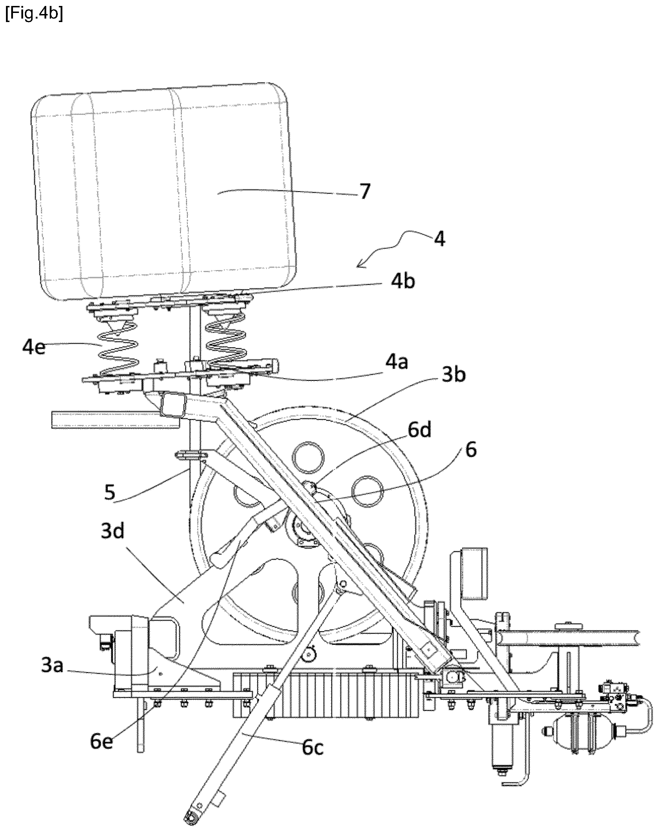

La figure 4a et la figure 4b montrent une vue latérale de la position de stockage/atterrissage du support 4 avant et après libération du panneau supérieur 4b du support 4. Dans la figure 4a, une contrainte de tension est exercée sur l'ombilic 5 qui va transmettre cette tension à la nacelle 7 posée sur le support 4 : les ressorts 4e sont alors compressés et la nacelle 7 est maintenu sur le support 4. Dans la figure 4b, cette tension dans l'ombilic 5 est relâchée, permettant aux ressorts 4e d'exercer leur contrainte de rappel élastique pour libérer la nacelle 7 du support 4.

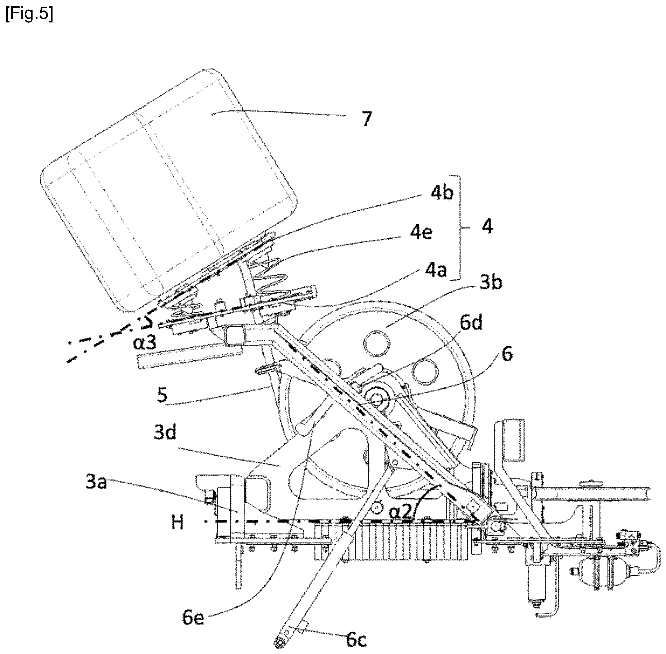

La position de décollage du support 4 est illustrée par la figure 5, le support 4 étant alors déplacé par rotation des bras redresseurs 6. Ce déplacement du support 4 est asservi par des codeurs angulaires 3e : ceux-ci sont installés de sorte à déterminer la position angulaire des bras redresseurs 6 et donc la position du support 4. Cette position de décollage induit dans cet exemple de réalisation une inclinaison de l'ombilic 5 d'un angle α2 de 75° par rapport au plan horizontal H. Pendant ce déplacement du support 4, la gravité et la tension de l'ombilic 5 maintiennent la nacelle 7 en équilibre sur le plateau supérieur du support.

Lorsque le support 4 est en position de décollage, l'aile 1 est dépliée et prête à s'envoler : l'aile 1 constitue alors une voile de traction qui va donc tirer la nacelle 7. Cette dernière est sollicitée d'une part par la voile de traction et d'autre part par l'ombilic 5 en tension : la nature élastique des ressorts 4e reliant les deux plateaux 4a, 4b permet au plateau supérieur 4b de basculer par rapport au plateau inférieur 4a pour accompagner les mouvements de l'aile par rapport au navire, cet angle α3 étant inférieur à 30°.

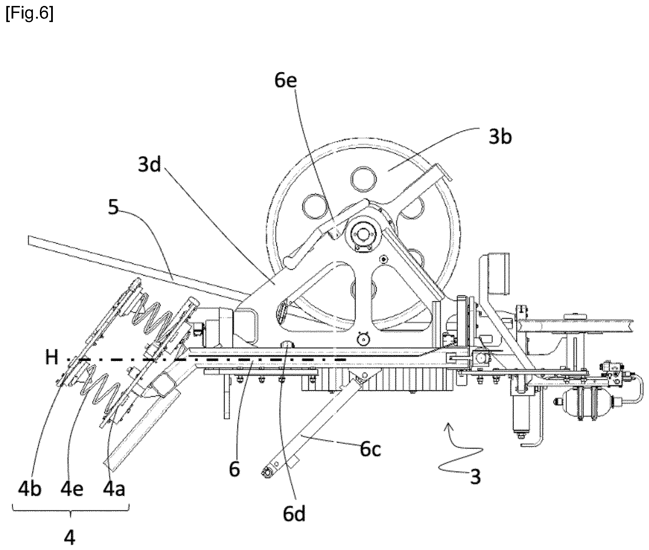

La position de croisière du support 4 est montrée en figure 6 dans laquelle les bras redresseurs 6 arrivent en butée sur la structure d'accueil 3 et sont alignés sur le plan horizontal H. Cette configuration des bras redresseurs 6 et du support 4 permet d'écarter le support 4 du champ de déplacement de l'ombilic 5 pour ne pas en entraver ses mouvements, ce qui réduirait l'efficacité de l'aile 1 volante.

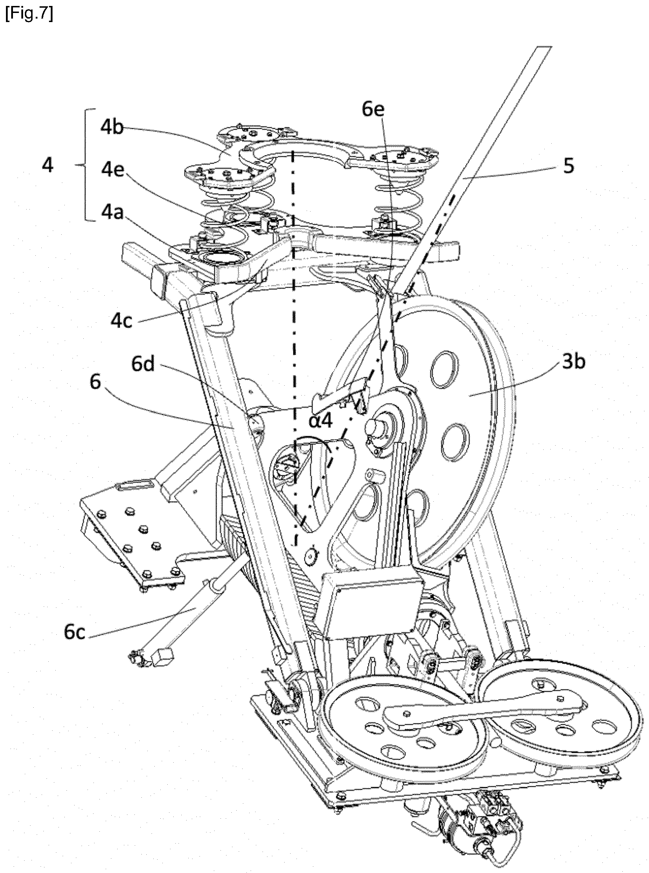

En position de captage de l'ombilic 5, le support 4 est illustré par la vue en perspective arrière de la figure 7. En cours de redressage, les bras redresseurs 6 remontent depuis la position de croisière vers une position intermédiaire entre la position de croisière et la position de stockage : l'ombilic 5 est proche de la verticale. La combinaison des capteurs 3e, 3f, 3g sur le châssis 3d, le bras suiveur 3c et les bras redresseurs 6 permettent de positionner au mieux le support 4 pour que le plateau inférieur 4a entre dans le champ de déplacement de l'ombilic 5 en position verticale.

Le support 4 comporte le bord 4c de guidage et de captage de l'ombilic 5 qui le ramène à partir d'un angle α4 maximum de 40° par rapport à un axe vertical perpendiculaire au plan horizontal H. Ce bord 4c de guidage est intégré au plateau inférieur 4a car ce plateau est le plus proche de l'ombilic 5, mais il pourrait également être intégré au plateau supérieur 4b ou aux deux plateaux dans des variantes de réalisation.

Les bras redresseurs 6 sont équipés chacun d'un galet 6d de guidage, le châssis 3d de la poulie de liaison 3b comportant une piste 6e de guidage en vis-à-vis de chaque galet 6d de guidage. Cette liaison, visible également dans la figure 4b et la figure 5 permet lors du captage de l'ombilic de guider la poulie de liaison 3b et de l'orienter verticalement pour favoriser l'atterrissage de la nacelle 7.

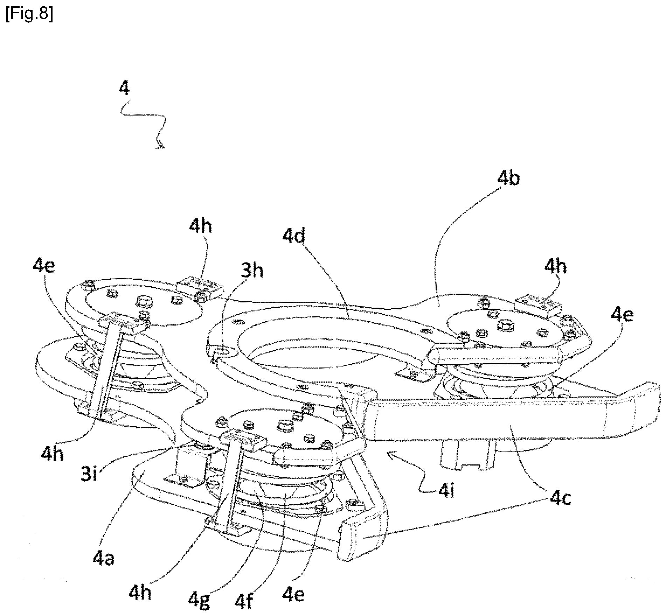

La vue en perspective en figure 8 détaille les éléments constitutifs du support 4 : les plateaux inférieur 4a et supérieur 4b sont reliés par les trois ressorts 4e hélicoïdaux. Le plateau inférieur 4a intègre le bord 4c de guidage en matériau plastique, par exemple en matériau DELRIN. La combinaison de la géométrie du bord 4c et du matériau permettent de limiter les frottements de l'ombilic 5 sur le plateau inférieur 4a et donc de réduire son endommagement lors de son captage.

Le support 4 et les bras redresseurs 6 remontent depuis la position de captage : l'ombilic 5 étant dans le champ du bord 4c de guidage, il est guidé vers le centre du plateau inférieur 4a qui comporte une encoche de captage 4i. D'autres moyens de guidages et de captage de l'ombilic 5 peuvent être mis en œuvre tel qu'un mécanisme de crochetage ou un ensemble magnétique.

Le plateau supérieur 4b présente une surépaisseur 4d réalisant un moyen de centrage avec la nacelle 7, celle-ci présentant une structure complémentaire de cette surépaisseur 4d. La géométrie circulaire de la surépaisseur 4d permet une rotation de la nacelle 7 sur le support 4 après le centrage. Lors de l'atterrissage, la nacelle 7 est mécaniquement guidée par ce couplage mécanique qui assure la stabilité de la nacelle 7 sur le support 4. Un capteur de présence à induction 3h est avantageusement installé sur le plateau supérieur 4b pour détecter la présence de la nacelle 7 et commander la mise sous tension de l'ombilic 5 après l'atterrissage de la nacelle, cette mise sous tension permettant de maintenir la nacelle.

Le support 4 comporte trois capteurs 3i sur le plateau inférieur 4a au voisinage des ressorts 4e pour détecter la position et le centrage du plateau supérieur 4b par rapport au plateau inférieur 4a et pour verrouiller la nacelle 7 sur le support en position de stockage par traction sur l'ombilic 5. Dans cet exemple de réalisation, les ressorts 4e sont équipés d'un doigt centreur 4f à une de leurs extrémités et d'un cône centreur 4g - complémentaire du doigt centreur - à leur autre extrémité : ce système localisé dans chacun des trois ressorts 4e réalise le centrage du plateau supérieur 4b sur le plateau inférieur 4a. De plus, quatre sangles 4h de maintien positionnées au voisinage des ressorts 4e assurent un verrouillage complémentaire des ressorts 4e et du plateau supérieur 4b sur le plateau inférieur 4a lors de phases de maintenance par exemple. Ces sangles 4h de maintien permettent de relâcher la tension de l'ombilic 5 tout en conservant le support 4 en position de stockage. Le nombre et la position de ces sangles 4h de maintien est variable et ajustable en fonction des besoins du support 4.

L'ensemble des capteurs sont reliés à un système de commande de la structure d'accueil 3 permettant au système de contrôler et d'asservir dynamiquement la position des bras redresseurs 6 et du support 4 pendant les différentes phases d'utilisation de l'aile 1 et de sa nacelle 7.

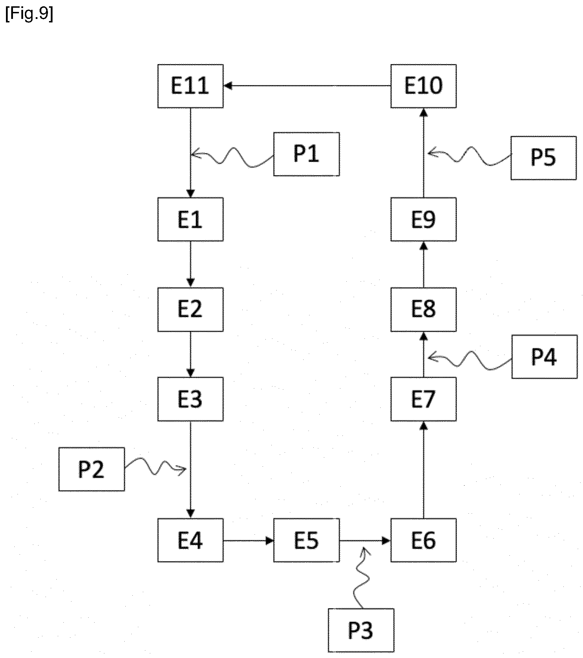

Le logigramme de la figure 9 détaille les étapes suivantes d'un exemple de procédé de décollage de la nacelle 7 automatisé par la localisation du basculement du support 4, du bras suiveur 3c et de la poulie de liaison 3b ainsi que par un asservissement du basculement des bras redresseurs 6 à partir de la position de stockage P1 :
- Une étape E1 de basculement du support 4 et de la nacelle 7 vers la position de décollage jusqu'à une inclinaison de l'ombilic 5 d'un angle égal à 75° par rapport au plan horizontal ;
- Une étape E2 de déploiement de l'aile volante et de libération du plateau supérieur 4b ;
- Une étape E3 de basculement de la nacelle 7 par rapport au support 4 vers une position de décollage P2 pour que la nacelle 7 suive la direction de l'aile 1 ;
- Une étape E4 de décollage de la nacelle 7 et de déroulement de l'ombilic 5 qui s'étend dans un champ de déplacement, et
- Une étape E5 de basculement du support 4 jusqu'à être écarté du champ de déplacement de l'ombilic 5 vers la position de croisière P3, les bras redresseurs 6 arrivant en butée du bâti pour escamoter le support du champ de déplacement de l'ombilic qui est inclus dans un cône de demi-angle au sommet égal à 80° et d'axe perpendiculaire au plan horizontal.

Le diagramme de la figure 9 détaille également les étapes d'un exemple de procédé d'atterrissage de la nacelle automatisé par la localisation du basculement du support 4, du bras suiveur 3c et de la poulie de liaison 3b ainsi que par un asservissement du basculement des bras redresseurs 6 à partir de la position de croisière P3 :
- Une étape E6 de descente de l'aile 1 volante et de la nacelle 7 par traction sur l'ombilic 5 ;
- Une étape E7 de basculement retour du support 4 qui entre dans le champ de déplacement de l'ombilic 5 en position de captage P4 ;
- Une étape E8 de captage puis de centrage de l'ombilic 5 pendant le basculement retour du support 4 qui réduit progressivement le champ de déplacement de l'ombilic 5 qui est inclus dans un cône de demi-angle au sommet égal à 20° ;
- Une étape E9 de basculement retour du support 4 jusqu'à sa position de d'atterrissage P5 ;
- Une étape E10 d'atterrissage et d'amortissement de la nacelle 7 sur le support 4 ainsi que de tension de l'ombilic 5 après détection de l'atterrissage de la nacelle 7 sur le support 4 pour l'y maintenir, et
- Une étape E11 de basculement vers la position de stockage P1.

Pendant l'étape E8 de captage de l'ombilic, les bras redresseurs 6 guident et maintiennent la poulie de liaison 3b pour l'amener à la verticale en position d'atterrissage P4.

L'invention n'est pas limitée aux exemples de réalisation et de mise en œuvre décrits et représentés. Ainsi le support peut être solidarisé aux bras redresseurs par tout moyen de fixation tel que par soudure, collage et rivetage. Les moyens de rappel élastiques entre les plateaux du support peuvent également être constitués de ressorts à lames ou d'une couche de matériau élastique.

Par ailleurs les bras redresseurs peuvent suivre par rapport au bâti de la structure d'accueil des cinématiques de translation, translation circulaire ou de tout autre type pour permettre au support de présenter des positions de stockage, de décollage, de croisière et de captage, le mécanisme d'entrainement étant alors constitué par des courroies, des bielles ou des axes d'entrainement.

L'invention peut également être combinée avec elle-même pour utiliser plusieurs ailes 1 de tractions sur un navire ou pour générer de l'énergie.

## Revendications

1. Structure d'accueil (3) de nacelle (7) d'aile (1) volante reliée par un ombilic (5) à un navire, cette structure (3) comportant un bâti (3a) définissant un plan horizontal (H), au moins une poulie de liaison (3b) de l'ombilic (5), la poulie de liaison (3b) étant montée sur un châssis (3d), ainsi qu'un bras suiveur (3c) et un support (4) de nacelle (7), dans lequel le support (4) comporte :
- au moins deux plateaux superposés, un plateau dit inférieur (4a) sous un plateau dit supérieur (4b), le plateau supérieur (4b) accueillant la nacelle (7) ;
- au moins un moyen de guidage et de captage de l'ombilic (5); le support (4) étant relié au bâti (3a) par au moins un bras redresseur (6) fixé sur le plateau inférieur (4a) et mobile par rapport au bâti (3a) entre une position (P1) de stockage de la nacelle (7), une position (P2) de décollage de la nacelle (7), une position (P3) de croisière à distance de l'ombilic (5), une position (P4) de captage de l'ombilic (5) ) et une position (P5) d'atterrissage de la nacelle (7),
caractériséé en ce que le support comporte de plus au moins un moyen de rappel élastique et déformable de solidarisation des plateaux (4a, 4b).

2. Structure d'accueil (3) selon la revendication précédente, dans laquelle le support (4) est relié par deux bras redresseurs (6) localisés de part et d'autre de la poulie d'entrainement (3b) et solidarisés à l'une de leurs extrémités (6a) par une barre transverse (6b).

3. Structure d'accueil (3) selon la revendication précédente, dans laquelle le plateau inférieur (4a) du support (4) est vissé à la barre transverse (6b).

4. Structure d'accueil (3) selon l'une quelconque des revendications 1 à 3, dans laquelle les bras redresseurs (6) sont mobiles en rotation autour d'un axe (P') parallèle au plan horizontal (H) et sont actionnés par au moins un mécanisme d'entrainement.

5. Structure d'accueil (3) selon la revendication précédente, dans laquelle le mécanisme d'entrainement est constitué par des vérins (6c).

6. Structure d'accueil (3) selon l'une quelconque des revendications 1 à 5, dans laquelle en position de stockage, le support (4) est dans un plan parallèle au plan horizontal (H) et l'ombilic (5) forme un angle compris entre 60° et 120° par rapport au plan horizontal (H).

7. Structure d'accueil (3) selon l'une quelconque des revendications 1 à 6, dans laquelle le plateau supérieur (4b) présente un moyen de centrage de la nacelle (7).

8. Structure d'accueil (3) selon l'une quelconque des revendications 1 à 7, dans laquelle les moyens de rappel élastique sont constitués par trois ressorts (4e).

9. Structure d'accueil (3) selon l'une quelconque des revendications 1 à 8, dans laquelle le plateau supérieur (4b) bascule par rapport au plateau inférieur (4a) d'un angle inférieur à 30°.

10. Structure d'accueil (3) selon l'une quelconque des revendications 1 à 9, dans laquelle le moyen de guidage et de captage ramène l'ombilic (5) à partir d'un angle maximum de 40° par rapport à un axe vertical perpendiculaire au plan horizontal (H).

11. Structure d'accueil (3) selon l'une quelconque des revendications 1 à 10, dans laquelle le moyen de guidage est intégré au plateau inférieur (4a).

12. Structure d'accueil (3) selon l'une quelconque des revendications 1 à 11, dans laquelle le moyen de guidage est en plastique tel que le DELRIN.

13. Structure d'accueil (3) selon l'une quelconque des revendications 1 à 12, dans laquelle le châssis (3d) de la poulie de liaison (3b) est équilibré et articulé latéralement autour d'un axe (Q) perpendiculaire à l'axe de rotation des bras redresseurs et parallèle au plan horizontal (H).

14. Structure d'accueil (3) selon l'une quelconque des revendications 1 à 13, dans laquelle au moins un bras redresseur (6) est équipé d'un galet de guidage (6d).

15. Structure d'accueil (3) selon la revendication précédente, dans laquelle le châssis (3d) de la poulie de liaison (3b) comporte au moins une piste de guidage (6e) en vis-à-vis de chaque galet de guidage (6d).

16. Structure d'accueil (3) selon l'une quelconque des revendications 1 à 15, dans laquelle la structure d'accueil comporte des capteurs de position des bras redresseurs (6), du châssis (3d) de la poulie de liaison (3b) et du bras suiveur (3c).

17. Structure d'accueil (3) selon l'une quelconque des revendications 1 à 16, dans laquelle la structure d'accueil comporte au moins un capteur de présence sur le plateau supérieur.

18. Structure d'accueil (3) selon l'une quelconque des revendications 1 à 17, dans laquelle le plateau inférieur (4a) comporte au moins un capteur (3i) au voisinage des moyens de rappel élastique.

19. Procédé de décollage et d'atterrissage d'une nacelle (5) d'aile (1) volante sur le support (4) d'une structure d'accueil (3) selon l'une quelconque des revendications 1 à 18, dans lequel le décollage de la nacelle (5) à partir de la position de stockage (P1) se déroule selon les étapes suivantes :
- une étape (E1) de basculement du support (4) et de la nacelle vers la position de décollage (P2) ;
- une étape (E2) de déploiement de l'aile (1) volante ;
- une étape (E4) de décollage de la nacelle (7) et de déroulement de l'ombilic (5) qui s'étend dans un champ de déplacement , et
- une étape (E5) de basculement du support (4) vers la position de croisière (P3),
et **caractérisé en ce que** l'atterrissage de la nacelle (7) se déroule selon les étapes suivantes :
- une étape (E6) de descente de l'aile (1) volante et de la nacelle (7) par traction sur l'ombilic (5) ;
- une étape (E7) de basculement retour du support (4) ;
- une étape (E8) de captage puis de centrage de l'ombilic (5) pendant le basculement retour du support (4) ;
- une étape (E9) de basculement retour du support (4) jusqu'à la position d'atterrissage (P5) ;
- une étape (E10) d'atterrissage de la nacelle (7) sur le support (4), et
- une étape (E11) de basculement vers la position de stockage (P1).

20. Procédé de décollage et d'atterrissage selon la revendication 19 dans lequel le décollage et l'atterrissage de la nacelle (7) sont automatisés par localisation du basculement du support (4), du bras suiveur (3c) et de la poulie de liaison (3b) ainsi que par asservissement du basculement des bras redresseurs (6).

21. Procédé de décollage et d'atterrissage selon l'une quelconque des revendications 19 à 20 dans lequel en position de décollage (P2) l'angle de l'inclinaison de l'ombilic (5) est compris entre 70° et 80° par rapport au plan horizontal (H).

22. Procédé de décollage et d'atterrissage selon l'une quelconque des revendications 19 à 21 dans lequel le procédé comporte après l'étape (E2) une étape (E3) de basculement de la nacelle (7) par rapport au support (4).

23. Procédé de décollage et d'atterrissage selon l'une quelconque des revendications 19 à 22 dans lequel en position de croisière (P3) les bras redresseurs (6) arrivent en butée du bâti (3a).

24. Procédé de décollage et d'atterrissage selon l'une quelconque des revendications 19 à 23 dans lequel le champ de déplacement de l'ombilic (5) lors de l'étape de captage (E8) est inclus dans un cône de demi-angle au sommet égal à 20°.

25. Procédé de décollage et d'atterrissage selon l'une quelconque des revendications 19 à 24 dans lequel pendant l'étape (E8) les bras redresseurs (6) guident et maintiennent la poulie de liaison (3b).

26. Procédé de décollage et d'atterrissage selon l'une quelconque des revendications 19 à 25 dans lequel pendant l'étape (E10) la nacelle (7) est amortie pendant l'atterrissage sur le support (4).

27. Procédé de décollage et d'atterrissage selon l'une quelconque des revendications 19 à 26 dans lequel pendant l'étape (E10) l'ombilic (5) est mis sous tension après détection de l'atterrissage de la nacelle (7) sur le support (4).

## Patentansprüche

1. Aufnahmestruktur (3) für eine Gondel (7) eines Drachens (1), die durch ein Zugseil (5) mit einem Schiff verbunden ist, wobei diese Struktur (3) ein Gestell (3a), das eine horizontale Ebene (H) definiert, mindestens eine Verbindungsscheibe (3b) für das Zugseil (5), wobei die Verbindungsscheibe (3b) an einem Rahmen (3d) montiert ist, sowie einen Folgearm (3c) und einen Träger (4) für die Gondel (7) umfasst, wobei der Träger (4) umfasst:
- mindestens zwei übereinander liegende Platten, eine sogenannte untere Platte (4a) unter einer sogenannten oberen Platte (4b), wobei die obere Platte (4b) die Gondel (7) aufnimmt;
- mindestens ein Führungs- und Einholmittel für das Zugseil (5);
wobei der Träger (4) mit dem Gestell (3a) durch mindestens einen Aufrichtarm (6) verbunden ist, der an der unteren Platte (4a) fixiert ist und in Bezug auf das Gestell (3a) zwischen einer Lagerungsposition (P1) der Gondel (7), einer Startposition (P2) der Gondel (7), einer Reiseposition (P3) im Abstand vom Zugseil (5), einer Einholposition (P4) des Zugseils (5) und einer Landeposition (P5) der Gondel (7) beweglich ist, **dadurch gekennzeichnet, dass** der Träger darüber hinaus mindestens ein elastisches und verformbares Rückholmittel zur Befestigung der Platten (4a, 4b) umfasst.

2. Aufnahmestruktur (3) nach dem vorhergehenden Anspruch, wobei der Träger (4) durch zwei Aufrichtarme (6) verbunden ist, die beidseits der Antriebsscheibe (3b) angeordnet sind und an einem ihrer Enden (6a) durch einen Querstab (6b) befestigt sind.

3. Aufnahmestruktur (3) nach dem vorhergehenden Anspruch, wobei die untere Platte (4a) des Trägers (4) an den Querstab (6b) geschraubt ist.

4. Aufnahmestruktur (3) nach einem der Ansprüche 1 bis 3, wobei die Aufrichtarme (6) um eine parallel zu der horizontalen Ebene (H) verlaufende Achse (P1) drehbeweglich sind und durch mindestens einen Antriebsmechanismus betätigt werden.

5. Aufnahmestruktur (3) nach dem vorhergehenden Anspruch, wobei der Antriebsmechanismus aus Zylindern (6c) besteht.

6. Aufnahmestruktur (3) nach einem der Ansprüche 1 bis 5, wobei, in der Lagerungsposition, der Träger (4) in einer parallel zu der horizontalen Ebene (H) verlaufenden Ebene ist und das Zugseil (5) einen Winkel zwischen 60° und 120° in Bezug auf die horizontale Ebene (H) bildet.

7. Aufnahmestruktur (3) nach einem der Ansprüche 1 bis 6, wobei die obere Platte (4b) ein Mittel zum Zentrieren der Gondel (7) aufweist.

8. Aufnahmestruktur (3) nach einem der Ansprüche 1 bis 7, wobei die elastischen Rückholmittel aus drei Federn (4e) bestehen.

9. Aufnahmestruktur (3) nach einem der Ansprüche 1 bis 8, wobei die obere Platte (4b) in Bezug auf die untere Platte (4a) um einen Winkel von weniger als 30° schwenkt.

10. Aufnahmestruktur (3) nach einem der Ansprüche 1 bis 9, wobei das Führungs- und Einholmittel das Zugseil (5) ab einem maximalen Winkel von 40° in Bezug auf eine senkrecht zu der horizontalen Ebene (H) verlaufende vertikale Achse zurückführt.

11. Aufnahmestruktur (3) nach einem der Ansprüche 1 bis 10, wobei das Führungsmittel in die untere Platte (4a) integriert ist.

12. Aufnahmestruktur (3) nach einem der Ansprüche 1 bis 11, wobei das Führungsmittel aus Kunststoff wie DELRIN ist.

13. Aufnahmestruktur (3) nach einem der Ansprüche 1 bis 12, wobei der Rahmen (3d) der Verbindungsscheibe (3b) ausgewuchtet ist und seitlich um eine senkrecht zur Drehachse der Aufrichtarme und parallel zu der horizontalen Ebene (H) verlaufende Achse (Q) angelenkt ist.

14. Aufnahmestruktur (3) nach einem der Ansprüche 1 bis 13, wobei mindestens ein Aufrichtarm (6) mit einer Führungsrolle (6d) ausgestattet ist.

15. Aufnahmestruktur (3) nach dem vorhergehenden Anspruch, wobei der Rahmen (3d) der Verbindungsscheibe (3b) mindestens eine Führungsbahn (6e) gegenüber jeder Führungsrolle (6d) umfasst.

16. Aufnahmestruktur (3) nach einem der Ansprüche 1 bis 15, wobei die Aufnahmestruktur Positionssensoren für die Aufrichtarme (6), den Rahmen (3d) der Verbindungsscheibe (3b) und den Folgearm (3c) umfasst.

17. Aufnahmestruktur (3) nach einem der Ansprüche 1 bis 16, wobei die Aufnahmestruktur mindestens einen Anwesenheitssensor auf der oberen Platte umfasst.

18. Aufnahmestruktur (3) nach einem der Ansprüche 1 bis 17, wobei die untere Platte (4a) mindestens einen Sensor (3i) in der Nähe der elastischen Rückholmittel umfasst.

19. Verfahren zum Starten und Landen einer Gondel (5) eines Drachens (1) auf dem Träger (4) einer Aufnahmestruktur (3) nach einem der Ansprüche 1 bis 18, wobei das Starten der Gondel (5) ausgehend von der Lagerungsposition (P1) gemäß den folgenden Schritten abläuft:
- einem Schritt (E1) des Schwenkens des Trägers (4) und der Gondel zu der Startposition (P2);
- einem Schritt (E2) des Entfaltens des Drachens (1);
- einem Schritt (E4) des Startens der Gondel (7) und des Abhaspelns des Zugseils (5), das sich in einem Bewegungsbereich erstreckt, und
- einem Schritt (E5) des Schwenkens des Trägers (4) zu der Reiseposition (P3),
und **dadurch gekennzeichnet, dass** das Landen der Gondel (7) gemäß den folgenden Schritten abläuft:
- einem Schritt (E6) des Niederholens des Drachens (1) und der Gondel (7) durch Ziehen an dem Zugseil (5);
- einem Schritt (E7) des Zurückschwenkens des Trägers (4);
- einem Schritt (E8) des Einholens und anschließenden Zentrierens des Zugseils (5) während des Zurückschwenkens des Trägers (4);
- einem Schritt (E9) des Zurückschwenkens des Trägers (4) bis in die Landeposition (P5);
- einem Schritt (E10) des Landens der Gondel (7) auf dem Träger (4), und
- einem Schritt (E11) des Schwenkens zu der Lagerungsposition (P1).

20. Verfahren zum Starten und Landen nach Anspruch 19, wobei das Starten und das Landen der Gondel (7) automatisiert sind durch Lokalisierung des Schwenkens des Trägers (4), des Folgearms (3c) und der Verbindungsscheibe (3b) sowie durch Steuern des Schwenkens der Aufrichtarme (6).

21. Verfahren zum Starten und Landen nach einem der Ansprüche 19 bis 20, wobei in der Startposition (P2) der Neigungswinkel des Zugseils (5) zwischen 70° und 80° in Bezug auf die horizontale Ebene (H) beträgt.

22. Verfahren zum Starten und Landen nach einem der Ansprüche 19 bis 21, wobei das Verfahren nach dem Schritt (E2) einen Schritt (E3) des Schwenkens der Gondel (7) in Bezug auf den Träger (4) umfasst.

23. Verfahren zum Starten und Landen nach einem der Ansprüche 19 bis 22, wobei in der Reiseposition (P3) die Aufrichtarme (6) an das Gestell (3a) in Anschlag gelangen.

24. Verfahren zum Starten und Landen nach einem der Ansprüche 19 bis 23, wobei der Bewegungsbereich des Zugseils (5) bei dem Schritt des Einholens (E8) in einem Kegel mit einem halben Kegelwinkel von 20° enthalten ist.

25. Verfahren zum Starten und Landen nach einem der Ansprüche 19 bis 24, wobei während des Schritts (E8) die Aufrichtarme (6) die Verbindungsscheibe (3b) führen und halten.

26. Verfahren zum Starten und Landen nach einem der Ansprüche 19 bis 25, wobei während des Schritts (E10) die Gondel (7) während des Landens auf dem Träger (4) gedämpft wird.

27. Verfahren zum Starten und Landen nach einem der Ansprüche 19 bis 26, wobei während des Schritts (E10) das Zugseil (5) nach Detektion des Landens der Gondel (7) auf dem Träger (4) gespannt wird.

## Claims

1. A structure (3) for mounting a pod (7) of a kite (1) connected by an umbilical (5) to a ship, this structure (3) including a frame (3a) defining a horizontal plane (H), at least one pulley (3b) for connecting the umbilical (5), the connecting pulley (3b) being installed on a chassis (3d), and a follower arm (3c) and a support (4) of the pod (7), that support (4) includes:
- at least two stacked plates, a so-called lower plate (4a) below a so-called upper plate (4b), the upper plate (4b) receiving the pod (7),
- at least one means for guiding and catching the umbilical (5) the support (4) is connected to the frame (3a) by at least one erector arm (6) fixed to the lower plate (4a) and mobile relative to the frame (3a) between a position (P1) for storing the pod (7), a position (P2) for the pod (7) to take off, a cruising position (P3) at a distance from the umbilical (5), a position (P4) for catching the umbilical (5), and a position (P5) for landing the pod (7) **characterized in that** the support further comprises at least one elastic and deformable return means for joining the plates (4a, 4b).

2. The mounting structure (3) as claimed in the preceding claim in which the support (4) is connected by two erector arms (6) located on respective opposite sides of the drive pulley (3b) and fastened together at one of their ends (6a) by a transverse bar (6b).

3. The mounting structure (3) as claimed in the preceding claim in which the lower plate (4a) of the support (4) is bolted to the transverse bar (6b).

4. The mounting structure (3) as claimed in any one of claims 1 to 3 in which the erector arms (6) are mobile in rotation about an axis (P') parallel to the horizontal plane (H) and are actuated by at least one drive mechanism.

5. The mounting structure (3) as claimed in the preceding claim in which the drive mechanism consists of cylinders (6c).

6. The mounting structure (3) as claimed in any one of claims 1 to 5 in which in the storage position the support (4) is in a plane parallel to the horizontal plane (H) and the umbilical (5) is at an angle between 60° and 120° inclusive to the horizontal plane (H).

7. The mounting structure (3) as claimed in any one of claims 1 to 6 in which the upper plate (4b) includes a means for centering the pod (7).

8. The mounting structure (3) as claimed in any one of claims 1 to 7 in which the elastic and deformable return means consist of three springs (4e).

9. The mounting structure (3) as claimed in any one of claims 1 to 8 in which the upper plate (4b) tilts relative to the lower plate (4a) by an angle less than 30°.

10. The mounting structure (3) as claimed in any one of claims 1 to 9 in which the guide and catching means return the umbilical (5) from a maximum angle of 40° to a vertical axis perpendicular to the horizontal plane (H) .

11. The mounting structure (3) as claimed in any one of claims 1 to 10 in which the guide and catching means is integral with the lower plate (4a).

12. The mounting structure (3) as claimed in any one of claims 1 to 11 in which the guide and catching means is made of a plastic material such as DELRIN.

13. The mounting structure (3) as claimed in any one of claims 1 to 12 in which the chassis (3d) of the connecting pulley (3b) is balanced and articulated laterally about an axis (Q) perpendicular to the rotation axis of the erector arms and parallel to the horizontal plane (H).

14. The mounting structure (3) as claimed in any one of claims 1 to 13 in which at least one erector arm (6) is equipped with a guide roller (6d).

15. The mounting structure (3) as claimed in the preceding claim in which the chassis (3d) of the connecting pulley (3b) includes at least one guide track (6e) facing each guide roller (6d).

16. The mounting structure (3) as claimed in any one of claims 1 to 15 in which the mounting structure includes sensors of the position of the erector arms (6), the chassis (3d) of the connecting pulley (3b) and the follower arm (3c).

17. The mounting structure (3) as claimed in any one of claims 1 to 16 in which the mounting structure includes at least one presence sensor on the upper plate.

18. The mounting structure (3) as claimed in any one of claims 1 to 17 in which the lower plate (4a) includes at least one sensor (3i) in the vicinity of the elastic return means.

19. A method for taking off and landing a pod (5) of a kite (1) on the support (4) of a mounting structure (3) as claimed in any one of claims 1 to 18 wherein take-off of the pod (5) from the storage position (P1) includes the following steps:
- a step (E1) of tilting the support (4) and the pod toward the take-off position (P2),
- a step (E2) of deploying the kite (1),
- a step (E4) of the pod (7) taking off and paying out the umbilical (5), which extends in a field of movement, and
- a step (E5) of tilting the support (4) toward the cruising position (P3),
and **characterized in that** landing the pod (7) includes the following steps:
- a step (E6) of lowering the kite (1) and the pod (7) by traction on the umbilical (5),
- a step (E7) of return tilting of the support (4),
- a step (E8) of catching and then centering the umbilical (5) during the return tilting of the support (4),
- a step (E9) of return tilting the support (4) into the landing position (P5),
- a step (E10) of landing the pod (7) on the support (4), and
- a step (E11) of tilting toward the storage position (P1).

20. The take-off and landing method as claimed in claim 19 in which take-off and landing of the pod (7) are automated by localizing the tilting of the support (4), the follower arm (3c) and the connecting pulley (3b) and by controlling the tilting of the erector arms (6).

21. The take-off and landing method as claimed in either one of claims 19 or 20 in which in the take-off position (P2) the angle of inclination of the umbilical (5) to the horizontal plane (H) is between 70° and 80°inclusive.

22. The take-off and landing method as claimed in any one of claims 19 to 21 including after the step (E2) a step (E3) of tilting the pod (7) relative to the support (4).

23. The take-off and landing method as claimed in any one of claims 19 to 22 in which in the cruising position (P3) the erector arms (6) abut on the frame (3a).

24. The take-off and landing method as claimed in any one of claims 19 to 23 in which the field of movement of the umbilical (5) during the catching step (E8) is included in a cone with a half-angle at the apex equal to 20°.

25. The take-off and landing method as claimed in any one of claims 19 to 24 in which during the step (E8) the erector arms (6) guide and retain the connecting pulley (3b).

26. The take-off and landing method as claimed in any one of claims 19 to 25 in which during the step (E10) the pod (7) is damped during landing on the support (4).

27. The take-off and landing method as claimed in any one of claims 19 to 26 in which during the step (E10) the umbilical (5) is tensioned after detection of landing of the pod (7) on the support (4).
